# EUROPÄISCHE PATENTSCHRIFT

(11) **EP 4 334 605 B1**
(45) Veröffentlichungstag und Bekanntmachung des Hinweises auf die Patenterteilung: **22.10.2025**
(21) Anmeldenummer: 22728041.9
(22) Anmeldetag: 22.04.2022
(51) Int. Cl.: F16D 65/092, F16D 55/224, B61H 5/00

(54) **BREMSBELAG FÜR EINE TEILBELAG-SCHEIBENBREMSE EINES SCHIENENFAHRZEUG**
BRAKE LINING FOR A PARTIAL-LINING DISC BRAKE OF A RAIL VEHICLE
GARNITURE DE FREIN POUR UN FREIN À DISQUE À GARNITURE PARTIELLE D'UN VÉHICULE FERROVIAIRE

(30) Priorität: 04.05.2021 DE 102021111549
(43) Veröffentlichungstag der Anmeldung: 13.03.2024
(73) Patentinhaber: KNORR-BREMSE Systeme für Schienenfahrzeuge GmbH, 80809 München (DE)
(72) Erfinder: LANGWADT, Marco, 80992 München (DE); HÄMMERL, Bernhard, 82216 Maisach (DE)
(86) Internationale Anmeldenummer: PCT/EP2022/060735
(87) Internationale Veröffentlichungsnummer: WO 2022/233601

(56) Entgegenhaltungen:
- DE-A1- 102016 100 454

## Beschreibung

Die vorliegende Erfindung betrifft einen Bremsbelag für eine Teilbelag-Scheibenbremse eines Schienenfahrzeugs gemäß dem Oberbegriff des Anspruchs 1. Die Erfindung betrifft des Weiteren eine Anordnung eines solchen Bremsbelags an einem Belaghalter einer Teilbelag-Scheibenbremse eines solchen Schienenfahrzeugs.

Eine gattungsgemäße Teilbelag-Scheibenbremse eines Schienenfahrzeugs ist beispielsweise aus der EP 0784761 B1 bekannt. Ein solcher Bremsbelag weist üblicherweise einen Belagträger auf, mit mehreren an diesem Belagträger sphärisch gelagerten Trägerblechen und an den Trägerblechen sphärisch gelagerten einzelnen Reibelementen. Der Belagträger selbst wird auf einen Belaghalter der Scheibenbremse aufgeschoben und anschließend über einen in den Belagträger eingreifenden, verspannbaren Bolzen des Belaghalters gesichert.

Durch die Aufteilung der Reibfläche des Bremsbelags auf eine Vielzahl von Reibelementen und eine statisch bestimmte Übertragung der Zuspannkraft eines Zangenhebels der Scheibenbremse bis auf diese einzelnen Belagelemente wird ein sehr gleichmäßiger Wärmeeintrag in die Bremsscheibe erzielt. Die Kraft auf den Belagträger wird dabei über die Trägerbleche an die einzelnen Belagelemente weitergeleitet. Die Kraft auf jedes Trägerblech wird dabei entsprechend der Dreibeingeometrie des Trägerbleches auf die jeweils drei Belagelemente verteilt. Ein solches Trägerblech mit den in sphärischen Lagern gehaltenen Reibelementen wird auch als Gruppenelement bezeichnet.

Nach aktuellerem Stand der Technik, beispielsweise bekannt aus der WO 2017/144556 A1 weisen die jeweils für drei Reibelemente ausgelegten Trägerbleche drei von einem Zentrum auskragende Arme auf, wobei an jedem der Arme jeweils ein Reibelement gelagert ist.

Für den Einsatz im Bremsbetrieb mit hohen auftretenden Reibtemperaturen und Bremskräften ist die Dicke der Arme mit ausreichender Festigkeit und Steifigkeit dimensioniert. Die Nutzungsdauer des Bremsbelags wird maßgeblich auch durch die Bauhöhe des Bremsbelags limitiert.

Dabei gilt als Nachteil, dass die Arme dieser Trägerbleche sich durch die auftretenden Kräfte verformen können, was unterschiedliche Reaktionskräfte auf der Bremsscheibe hervorrufen kann. Ebenso sind die Arme wegen der geringeren strukturellen Steifigkeit leichter plastifizierbar und weniger dauerfest. Im erhöhten Temperaturbereich der Anwendung verstärken sich diese Effekte.

Die Nutzungsdauer des Bremsbelags wird weiter durch das Volumen des Reibmaterials bestimmt. So bieten insbesondere Bremsbeläge für Scheibenbremsen von Hochgeschwindigkeitszügen, welche aufgrund ihrer konstruktiven Ausführung den durch tribologische Einflüsse während des Bremsens örtlich wechselnden Anpressdruck auf die Bremsscheibe selbsttätig vergleichmäßigen können, große Vorteile hinsichtlich des thermischen Ausnutzungsgrades der Bremsscheiben, was sich auf die nötige Baugröße der Bremsscheibe auswirkt.

Die Trägerbleche sind bei den oben beschriebenen Bremsbelägen durch die sphärische Lagerung wippenartig auf dem Belagträger angeordnet. Dabei wird der jeweilige Anteil der von einer Bremszange erzeugten Anpresskraft, der auf das Zentrum jedes der Trägerbleche geleitet wird, gleichmäßig auf die an diesem angeordneten Reibelemente weitergegeben.

Allerdings ist aufgrund der für ein solches wippenartig wirkendes Trägerblech benötigten Bauhöhe der Verschleißvorrat des Reibwerkstoffes geometrisch begrenzt bzw. direkt von der Dicke der Trägerbleche abhängig und durch diese limitiert.

Aus der DE 10 2016 100 454 A1 ist ein Bremsbelag mit plattenförmigen Trägerblechen bekannt.

Aufgabe der vorliegenden Erfindung ist es, einen gattungsgemäßen Bremsbelag dahingehend weiterzuentwickeln, dass dessen Verschleißvorrat gesteigert wird, ohne seine mechanischen Eigenschaften hinsichtlich der gleichmäßigen Druckverteilung zu beeinflussen. Weitere Aufgabe ist es, die mechanische Formstabilität der Trägerbleche bei hoher thermischer Belastung zu erhöhen, um die Häufigkeit der Wiederverwendbarkeit bei Überholung des Bremsbelages steigern zu können.

Diese Aufgaben werden durch einen Bremsbelag für eine Teilbelag-Scheibenbremse eines Schienenfahrzeugs mit den Merkmalen des Anspruchs 1 sowie durch eine Anordnung eines Bremsbelags einer Teilbelag-Scheibenbremse eines Schienenfahrzeugs an einem Belaghalter mit den Merkmalen des Anspruchs 18 gelöst.

Der erfindungsgemäße Bremsbelag weist einen Belagträger auf, mehrere am Belagträger sphärisch gelagerte, als Plattenelemente ausgebildete Trägerbleche sowie mehrere in Eckbereichen der Trägerbleche an diesen sphärisch gelagerte Reibelemente.

Jedes der Reibelemente weist ein eine Öffnung des Trägerbleches und eine Öffnung des Belagträgers durchsetzendes Halteelement auf, an dem ein Federelement abgestützt ist, wobei jedes der Reibelemente mittels des Federelements gegenüber dem Belagträger verspannt ist.

Ein Umfangsrand der Trägerbleche ist so geformt, dass ein Abstand des Umfangsrandes zu gedachten Verbindungslinien zwischen den Öffnungen des Trägerbleches zur Aufnahme der Halteelemente mindestens das 0,6-fache eines minimalen Abstands der Öffnungen des Trägerbleches zum Umfangsrand der Trägerbleche beträgt. Die Trägerbleche wenigstens eine Ausnehmung auf, die separat zu den von einem jeweiligen Halteelement durchsetzten Öffnungen ausgebildet ist.

Ein solchermaßen ausgebildeter Bremsbelag ermöglicht die Verringerung der Blechdicke des Trägerblechs, in dem die Kraftübertragung über die erheblich steifere und tragfähigere Struktur einer Plattengeometrie erfolgen kann. Dadurch kann bei gleichbleibender Bauhöhe des Bremsbelages eine erhöhte Verschleißdicke der Reibelemente zur Verfügung gestellt werden.

Die Kraftübertragung bei solchermaßen ausgebildeten Trägerblechen auf die zentrale Kalotte des Trägerblechs erfolgt durch eine mehrachsige Spannungsverteilung innerhalb der Plattenstruktur der Trägerbleche, welche eine höchstmögliche Steifigkeit und Tragfähigkeit bezogen auf die gewählte Blechdicke (Plattendicke etc.) bewirkt. Im Inneren der Trägerbleche entsteht ein mehrachsiger Spannungszustand, insbesondere unter Beteiligung von Umfangsspannungen.

Ein direkter Nutzen aus einem solchermaßen ausgebildeten Bremsbelag besteht in der Erhöhung des Verschleißvorrats der Reibelemente und in Folge dessen der Nutzungsdauer sowie der möglichen Anzahl von Überholungen solcher Bremsbeläge, was eine Minimierung der Lebensdauerkosten dieser Bremsbeläge zu Folge hat.

Denkbar ist auch, anstelle der Erhöhung des Verschleißvorrats die Bauhöhe des Bremsbelages insgesamt zu reduzieren, ohne den Verschleißvorrat gegenüber einem aus dem Stand der Technik bekannten Bremsbelag zu verringern, was aus Gründen der Gewichtseinsparung oder aufgrund von Restriktionen seitens der Einbausituation notwendig sein kann.

Ein Vorteil der Beibehaltung des Verschleißvorrats besteht zudem darin, dass bei gleichbleibender Eindringtiefe der Trägerbleche in die sphärischen Lager des Belagträgers sich der vertikale Abstand der Reibfläche des Reibelements zur Auflagerfläche des sphärischen Lagers des Belagträgers gegenüber dem aus dem Stand der Technik bekannte Aufbau verringert.

Das solchermaßen biegesteif ausgebildete Trägerblech ermöglicht zudem die Steigerung der Zyklen der Wiederverwendbarkeit durch die geringere Neigung der plastischen Lageverschiebung der die einzelnen Reibelemente aufnehmenden Einzelkalotten des Trägerblechs.

Darüber hinaus können bereits vorhandene Bremsbeläge mit herkömmlichen Trägerblechen in einem Überholungsprozess durch einfache Neubestückung mit den erfindungsgemäß ausgebildeten Trägerblechen und zugehörigen Belagelementen bestückt werden. Bestehende Funktionsflächen, insbesondere des Belagträgers, können dabei vollständig beibehalten werden.

Die wenigstens eine Ausnehmung in den Trägerblechen ermöglicht die Verhinderung einer Ansammlung von Bremsstaub unter der Plattenfläche der Trägerbleche und dient damit der zusätzlichen Sicherstellung der Beweglichkeit bzw. Schwenkbarkeit der Trägerbleche auf dem Belagträger.

Vorteilhafte Ausführungsvarianten der Erfindung sind Gegenstand der Unteransprüche.

Die Ausnehmung ist gemäß einer vorteilhaften Weiterbildung als die Dicke des Trägerbleches verringernde Vertiefung ausgebildet.

Bevorzugt ist wenigstens eine Ausnehmung in einer dem Belagträger zugewandten Seite des Trägerbleches ausgebildet.

Denkbar ist auch, die Ausnehmung oder eine weitere Ausnehmung in einer den Reibelementen zugewandten Seite des Trägerbleches auszubilden.

Gemäß einer weiteren bevorzugten Ausführungsvariante ist in der Ausnehmung ein Schlitz eingebracht.

Denkbar ist auch die Ausbildung der Ausnehmung als Durchgangsöffnung.

In einer bevorzugten Weiterbildung ist die als Durchgangsöffnung ausgebildete Ausnehmung als Nut, Bohrung oder Öffnung mit polygonalem, beispielsweise dreieckigem Querschnitt ausgebildet.

Die Ausnehmung erstreckt sich dabei gemäß einer bevorzugten Ausführungsvariante bis zum Umfangsrand des Trägerbleches.

Die Reibelemente des Bremsbelags sind bevorzugt mittels einer Kugelkalotte in jeweiligen kalottenförmigen Pfannen des jeweiligen Trägerblechs schwenkbar aufgenommen.

Gemäß einer weiteren Ausführungsvariante steht aus einer dem Belagträger zugewandten Seite der Trägerbleche jeweils eine zumindest abschnittsweise kalottenförmige Erhebung in eine jeweilige zumindest abschnittsweise kalottenförmige Pfanne des Belagträgers vor und ist in dieser schwenkbar aufgenommen.

Nach einer weiteren bevorzugten Ausführungsvariante steht aus einer dem Belagträger zugewandten Seite der Trägerbleche eine die Öffnungen des Trägerbleches umrandende zylindrischer Erhebung vor, die in einer jeweiligen Ausnehmung des Belagträgers mit Spiel aufgenommen ist.

Gemäß einer bevorzugten Ausführungsvariante sind an jedem der Trägerbleche drei Reibelemente angeordnet.

Die Trägerbleche sind bevorzugt in einer Ebene parallel zu einer Reibfläche der Reibelemente im Wesentlichen dreieckförmig, bevorzugt mit gerundeten Ecken, ausgebildet.

In einer weiteren bevorzugten Ausführungsvariante ist wenigstens ein durch ein Teilstück des Umfangsrandes gebildeter Seitenrand konvex geformt.

Gemäß einer weiteren Ausführungsvariante ist wenigstens ein durch ein Teilstück des Umfangsrandes gebildeter Seitenrand geradlinig geformt.

Die Aussparung des Belagträgers ist bevorzugt als Senkbohrung ausgebildet.

Die erfindungsgemäße Anordnung eines Bremsbelags einer Teilbelag-Scheibenbremse eines Schienenfahrzeuges an einem Belaghalter zeichnet sich durch einen wie oben beschriebenen Bremsbelag aus.

Nachfolgend werden bevorzugte Ausführungsbeispiele anhand der beiliegenden Figuren näher erläutert. Es zeigen:
- Figur 1: eine schematische isometrische Darstellung eines gattungsgemäßen Bremsbelags mit aus dem Stand der Technik bekanntem Trägerblech,
- Figur 2: eine der Fig. 1 entsprechende Darstellung einer Ausführungsvariante eines erfindungsgemäßen Bremsbelags,
- Figur 3: eine Schnittdarstellung durch ein Teilstück des in Figur 1 gezeigten gattungsgemäßen Bremsbelags,
- Figur 4: eine der Figur 3 entsprechende Schnittdarstellung durch den in Figur 2 gezeigten Bremsbelag,
- Figuren 5a - 5c: unterschiedliche Darstellungen einer ersten Ausführungsvariante eines Trägerbleches eines erfindungsgemäßen Bremsbelags,
- Figuren 6a - 6c: unterschiedliche isometrische Darstellungen einer alternativen Ausführungsvariante eines Trägerblechs mit sich bis zum Umfangsrand erstreckenden Ausnehmungen auf der dem Belagträger zugewandten Seite des Trägerblechs,
- Figuren 7a und 7b: den Figuren 6a und 6b entsprechende Darstellungen einer weiteren Ausführungsvariante eines Trägerblechs mit auf beiden Seiten des Trägerblechs angeordneten Ausnehmungen mit Durchgangsschlitz,
- Figuren 8a und 8b: den Figuren 6a und 6b entsprechende Darstellungen einer weiteren Ausführungsvariante eines Trägerblechs mit nutförmigen Ausnehmungen,
- Figuren 9a und 9b: den Figuren 6a und 6b entsprechende Darstellungen einer weiteren Ausführungsvariante eines Trägerblechs mit aus der dem Belagträger zugewandten Seite vorstehenden zylindrischen Erhebungen, welche die Öffnungen der Trägerbleche zur Aufnahme der Reibelemente umranden,
- Figuren 10a und 10b: den Figuren 6a und 6b entsprechende Darstellungen einer nochmals weiteren Ausführungsvariante eines Trägerblechs mit dreieckig geformten Ausnehmungen und zylindrischen Erhebungen,
- Figuren 11a und 11b: Draufsichten auf eine weitere Ausführungsvariante eines Trägerblechs mit zwei geradlinigen Seitenflächen und
- Figuren 12a und 12b: den Figuren 11a und 11b entsprechende Darstellungen einer weiteren Ausführungsvariante eines Trägerblechs mit vier geradlinig ausgebildeten Abschnitten des Umfangsrandes des Trägerblechs.

In der nachfolgenden Figurenbeschreibung beziehen sich Begriffe wie oben, unten, links, rechts, vorne, hinten usw. ausschließlich auf die in den jeweiligen Figuren gewählte beispielhafte Darstellung und Position des Bremsbelags, des Belagträgers, der Trägerbleche, der Reibelemente und dergleichen. Diese Begriffe sind nicht einschränkend zu verstehen, d.h., durch verschiedene Arbeitsstellungen oder die spiegelsymmetrische Auslegung oder dergleichen können sich diese Bezüge ändern.

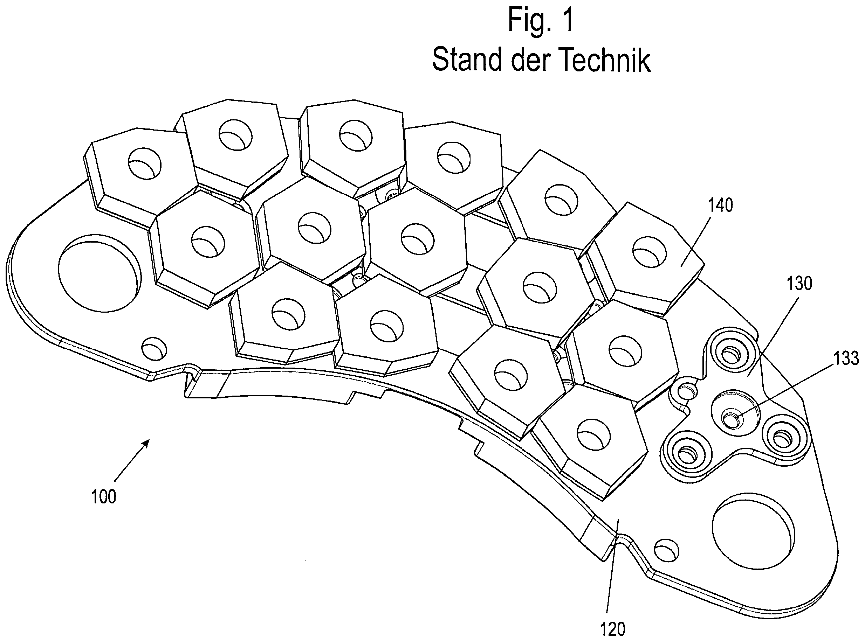

In **Figur 1** ist mit dem Bezugszeichen 100 ein aus dem Stand der Technik bekannter gattungsgemäßer Bremsbelag bezeichnet. Der Bremsbelag 100 weist einen Belagträger 102 auf, der eine Vielzahl von Aussparungen aufweist zur Anordnung einer Vielzahl von Gruppenelementen mit Belagelementen 104, die in Funktion mit ihrer Reibfläche bei einem Bremsvorgang an eine (nicht dargestellte Bremsscheibe) gedrückt werden. Jedes der Gruppenelemente besteht dabei aus drei Reibelementen 140 und einem diese tragenden Trägerblech 130.

Die Trägerbleche 130 sind hier sternförmig gestaltet. Im Zentrum der Trägerbleche 130 ist auf der dem Belagträger 2 zugewandten Seite eine kalottenförmige Erhebung 131 ausgebildet, die in eine kalottenförmige Pfanne des Belagträgers 120 vorsteht, um so die Trägerbleche 130 sphärisch am Belagträger 120 zu lagern.

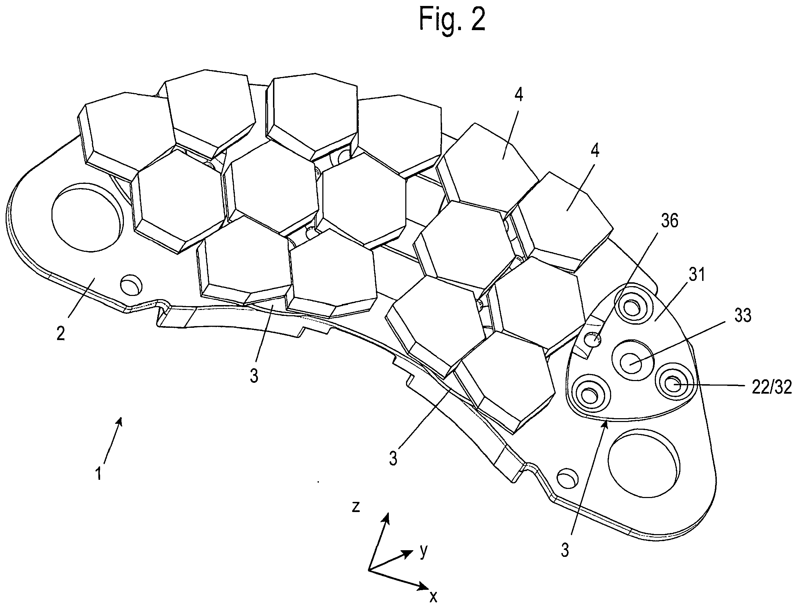

**Figur 2** zeigt einen mit dem Bezugszeichen 1 versehenen erfindungsgemäßen Bremsbelag 1, der in einer oben beschriebenen Teilbelag-Scheibenbremse eines Schienenfahrzeugs einsetzbar ist. Der Bremsbelag 1 weist ebenfalls einen Belagträger 2 auf, mit einer sich in einer x-y-Ebene erstreckenden Auflagefläche, mehrere am Belagträger 2 schwenkbar angeordnete, als Plattenelemente ausgebildete Trägerbleche 3 und mehrere in Eckbereichen der Trägerbleche 3 an diesen sphärisch gelagerte Reibelemente 4.

Die Reibelemente 4 bestehen dabei bevorzugt aus einer Reibelementplatte 42 mit daran gehaltenem Reibbelag 41, beispielsweise aus einem Sintermaterial.

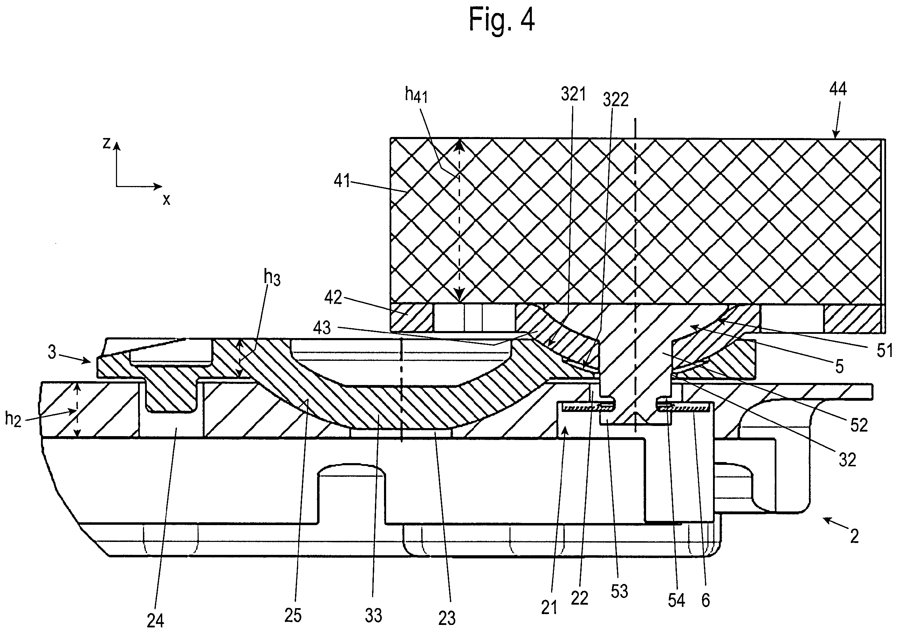

Wie weiter in einer in **Figur 4** gezeigten Schnittdarstellung durch eines der Reibelemente 4, ein Trägerblech 3 und ein Teilstück des Belagträgers 2 (entlang einer x-z-Schnittebene) zu erkennen ist, weist jedes der Reibelemente 4 ein durch eine Öffnung 32 des Trägerbleches 3 und eine Öffnung 22 des Belagträgers 2 ragendes Halteelement 5 auf, an dessen hier als Kopfteil 53 bezeichnetem Ende ein Federelement 6 gehalten ist.

Jedes der Federelemente 6 ist dabei in einer Aussparung 21 auf der den Trägerblechen 3 abgewandten Seite des Belagträgers 2 aufgenommen. Die Öffnungen 22 des Belagträgers 2 münden dabei in die jeweiligen Aussparungen 21. Das Kopfteil 53 der Halteelemente 5 weist in der hier gezeigten bevorzugten Ausführungsvariante eine Aufnahmenut 54 auf, in dem ein Teilstück des beispielsweise als Tellerfeder oder Formfeder ausgebildeten Federelements 6 abgestützt ist.

Das Federelement 6 stützt sich des Weiteren am die Öffnung 22 umrandenden Boden der Aussparung 21 des Belagträgers 2 in z-Richtung ab.

Dadurch ist jedes der Reibelemente 4 mittels eines solchen eine jeweiligen Federelements 6 gegenüber dem Belagträger 2 verspannt, bei gleichzeitiger Ermöglichung einer Kippbewegung der Reibelemente 4 gegenüber dem Trägerblech 3.

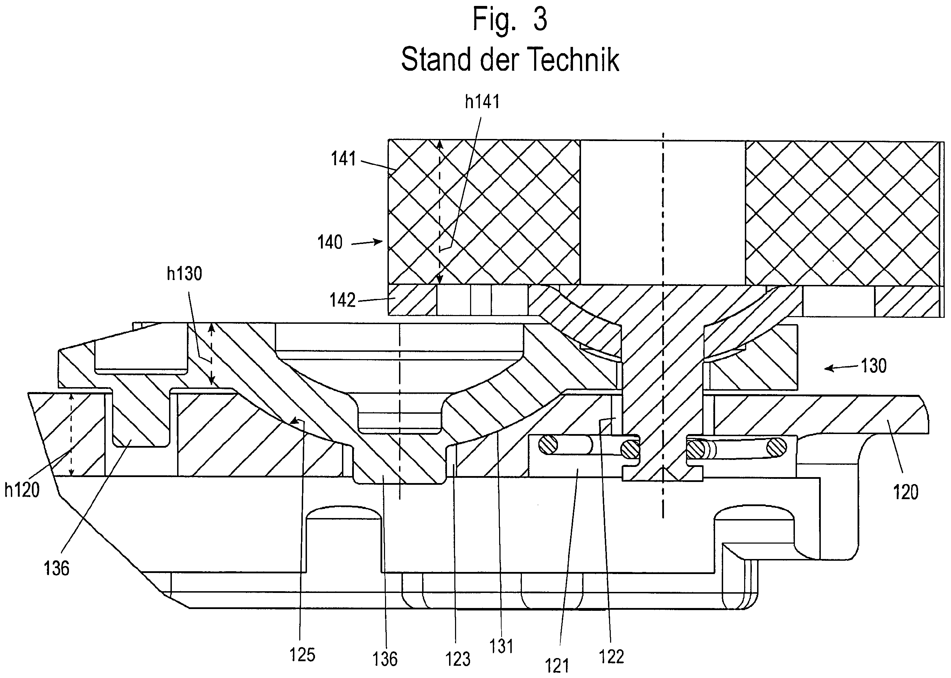

Wie ein Vergleich der **Figuren 3** **und** **4** zeigt, kann der Aufbau des Belagträgers 2 dabei dem aus Stand der Technik bekannten Aufbau eines solchen Belagträgers 120 entsprechen.

Während jedoch bei dem aus Stand der Technik bekannten Bremsbelag im Zentrum des Trägerblechs 130 ein Nocken 136 an der kalottenförmigen Erhebung 131 angeformt ist, der in die Aussparung 123 des Belagträger 120 in z-Richtung vorsteht, ist dieser Nocken 136 bei dem erfindungsgemäßen Trägerblech 3 durch einen Boden 33 ersetzt, der eine aus der dem Belagträger 2 abgewandten Seite 31 des Trägerbleches 3 vorstehende, hier kugelzonenartige, Erhebung 331 zur sphärischen Lagerung der Reibelemente 4 am Trägerblech 3 verschließt.

Dadurch ist die Dicke h₃ des Trägerblechs 3 gegenüber der Dicke h₁₃₀ des aus dem Stand der Technik bekannten Trägerblechs 130 wesentlich reduziert, wodurch die in der Beschreibungseinleitung genannten Vorteile ermöglicht sind, beispielsweise die Bestückung der Reibelemente 4 mit in der Höhe h₄₁ dickerem Reibmaterial 41 als es bei aus dem Stand der Technik bekannten Reibelementen 140 mit Reibmaterialdicken h₁₄₁ des Reibmaterials 141 möglich ist.

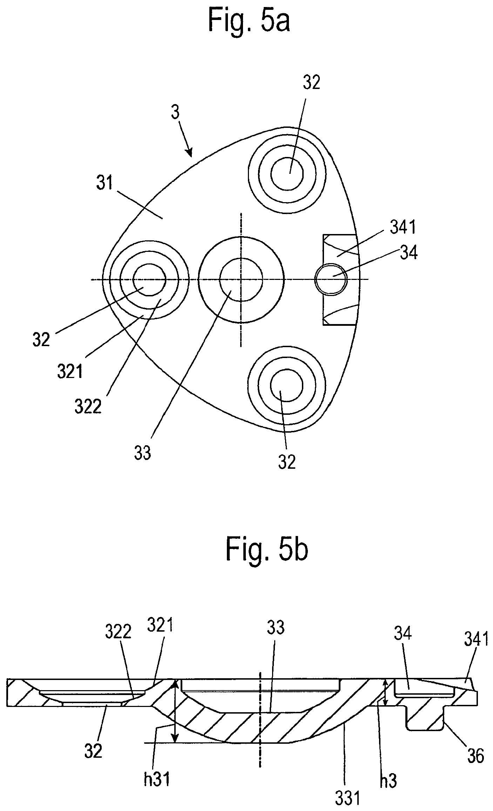

Als Dicke h₃ des Trägerblechs 3 wird hier die Blechdicke verstanden, nicht die in Figur 5b in z-Richtung betrachtete Bauhöhe h₃₁ des Trägerblechs 3 zwischen der dem Belagträger 2 abgewandten Seite 31 des Trägerbleches 3 und dem Boden der Pfanne 331.

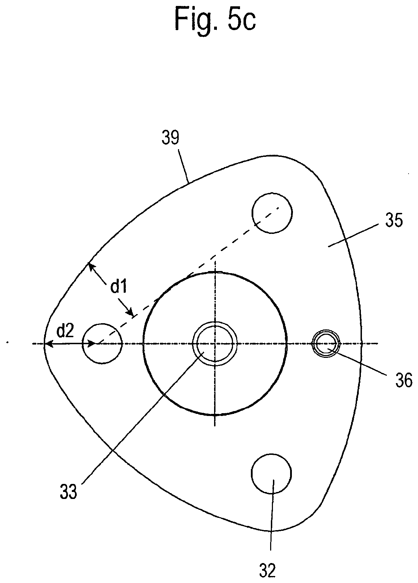

Die reduzierte Dicke h₃ der Trägerbleche 3 (in z-Richtung betrachtet) wird insbesondere dadurch ermöglicht, dass, wie beispielhaft in **Figur 5c** dargestellt ist, ein Umfangsrand 39 der Trägerbleche 3 so geformt ist, dass ein Abstand d₁ des Umfangsrandes 39 senkrecht zu gedachten Verbindungslinien zwischen den Mittelpunkten der Öffnungen 32 des Trägerblechs 3, die der Aufnahme der Halteelemente 5 dienen, mindestens das 0,6-fache eines minimalen Abstands d₂ vom Mittelpunkt der Öffnungen 32 des Trägerbleches 3 zum Umfangsrand 39 der Trägerbleche 3 beträgt. Bevorzugt weist das Verhältnis d₁/d₂ einen Wert von mindestens 0,8, besonders bevorzugt von mindestens 1,0 auf.

Anders ausgedrückt bildet die Außenkontur der Trägerbleche 3 bei der hier gezeigten Ausführungsvariante, bei der drei Reibelemente 4 an einem der Trägerbleche 3 angeordnet sind, eine, in einer x-y-Ebene senkrecht zur im Wesentlichen in z-Richtung ausgeübten Kraft betrachtet, eine Dreiecksform mit geradlinigen (d₁/d₂ = 1) oder gewölbten Seitenrändern, wobei die Wölbung der Seitenränder vom Mittelpunkt des jeweiligen Trägerbleches aus betrachtet bevorzugt konvex (d₁/d₂ >1) ist.

Denkbar sind prinzipiell auch leicht konkave Krümmungen der Seitenränder (0,6 < d₁/d₂ < 1).

Durch diesen Aufbau erfolgt eine Kraftübertragung auf die jeweiligen Einzelkalotten der Trägerbleche 3, die der Lagerung der Reibelemente 4 dienen, innerhalb der Plattenstruktur des Trägerblechs 3 durch eine mehrachsige Spannungsverteilung.

Die Reibelemente 4 sind dabei, wie in Figur 4 zu erkennen ist, mittels einer Kugelkalotte 43 in jeweiligen Pfannenrändern 321 des jeweiligen Trägerblechs 3 schwenkbar aufgenommen. Die Flächen der Pfannenränder 321 sind dabei bevorzugt als Kugelzone geformt.

Der Begriff Kugelzone bezeichnet dabei die gekrümmte Außenfläche einer Kugelscheibe.

Aus der dem Belagträger 2 zugewandten Seite 35 der Trägerbleche 3 steht jeweils eine zumindest abschnittsweise kalottenförmige Erhebung 331 in eine jeweilige zumindest abschnittsweise kalottenförmige Pfanne 25 des Belagträgers 2 vor und ist in dieser schwenkbar aufgenommen. Wie weiter oben bereits erwähnt, ist die zumindest abschnittsweise kalottenförmige Erhebung 331 bevorzugt als kugelzonenartig geformte Erhebung 331 ausgebildet, die durch den bevorzugt ebenen Boden 33 verschlossen ist.

Nachfolgend werden unterschiedliche Ausführungsvarianten solcher Trägerbleche 3 anhand der **Figuren 5a bis 12b** erläutert.

Bei der in den Figuren 5a bis 5c gezeigten Ausführungsvariante sind sämtliche der drei Seitenränder, die jeweils Teilstücke des Umfangsrandes 39 des Trägerblechs 3 bilden, konvex geformt. Die kugelzonenförmigen Pfannenränder 321, die jeweils eines der Reibelemente 4 an den Außenflächen der Kugelkalotten 43 aufnehmen, sind hier zur Öffnung 32 hin abgestuft ausgebildet, wobei eine konzentrisch zur Öffnung 32 ausgebildete Stufe 322 im eingesetzten Zustand des jeweiligen Reibelements 4 einen Hohlraum lässt.

Auf der den Reibelementen 4 zugewandten Seite 31 des Trägerblechs 3 ist bei dieser Ausführungsvariante im Bereich einer Seitenkante eine Vertiefung 341 mit einem Sackloch 34 angeformt. Direkt unterhalb dieses Sackloches 34 steht aus der dem Belagträger 2 zugewandten Belagträgerseite 35 ein Nocken 36 vor, der im montierten Zustand in eine Öffnung 24 des Belagträgers 2, gezeigt in Figur 4, vorsteht. Der Nocken 36 dient dabei einer bevorzugten Ausrichtung des Trägerblechs 3 auf dem Belagträger 2.

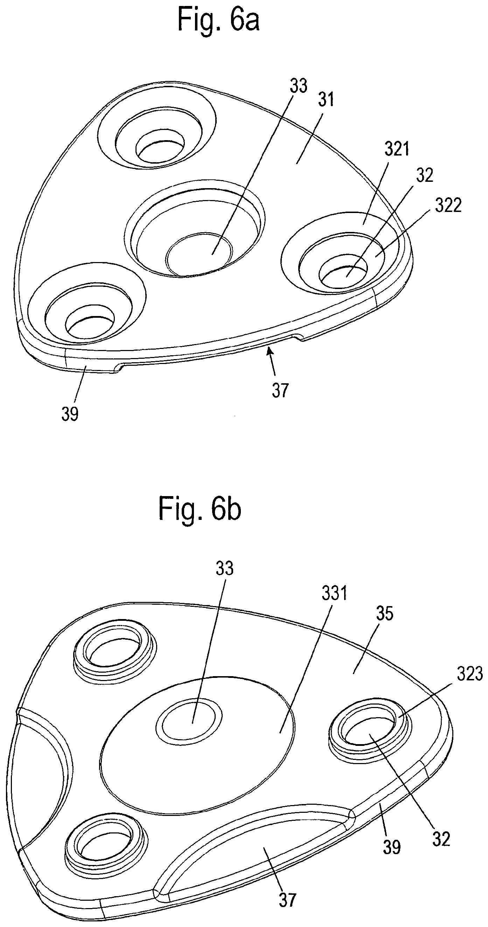

Bei der alternativen Ausführungsvariante des Trägerblechs 3 gemäß Figuren 6a bis 6c entspricht die Formgestalt des Trägerblechs 3 im Wesentlichen der in den Figuren 5a bis 5c gezeigten Ausführungsvariante. Auf einen Nocken 36 wird bei dieser Ausführungsvariante verzichtet.

Dagegen weist diese Ausführungsvariante auf ihrer dem Belagträger 2 zugewandten Seite, wie es in Figur 6b dargestellt ist, zwei Ausnehmungen 37 auf. Denkbar ist prinzipiell auch, die Ausbildung nur einer solchen Ausnehmung 37.

Die hier gezeigte Ausnehmung 37 ist dabei als die Dicke des Trägerbleches 3 verringernde Vertiefung ausgebildet. Die Ausnehmung 37 erstreckt sich dabei bis an den Umfangsrand 39 des Trägerblechs 3.

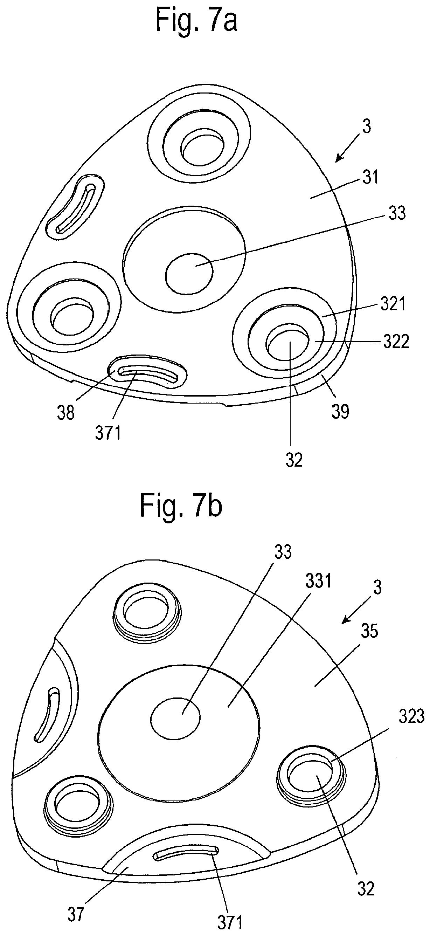

Auch die in den **Figuren 7a und 7b** gezeigte Ausführungsvariante entspricht in ihrer Umfangsrandgestaltung im Wesentlichen der Ausführungsvarianten gemäß Figuren 5a bis 5c und 6a und 6b.

Im Unterschied zu der in Figur 6a und 6b gezeigten Ausführungsvariante ist hier im Bereich der Ausnehmung 37 darüber hinaus ein Schlitz 371 vorgesehen. Dieser Schlitz 371 ist auf der den Reibelementen 4 zugewandten Reibelementseite 31 des Trägerblechs 3 von einer weiteren Ausnehmung 38 umrandet. Die Ausnehmung 38 ist dabei in die Reibelementseite 31 eingebracht und erstreckt sich nur bis nahe an den Umfangsrand 39 des Trägerblechs 3.

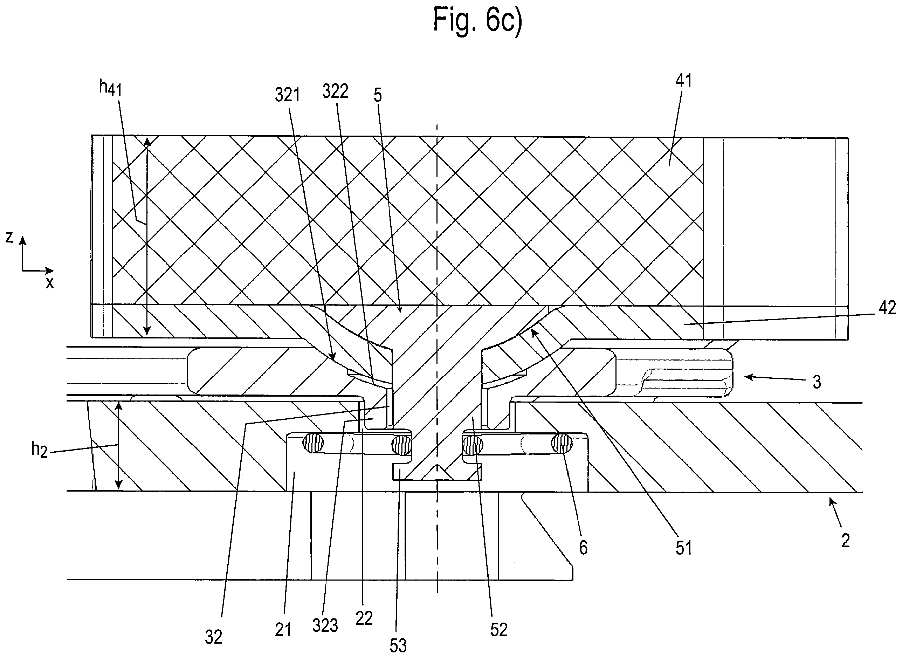

Wie weiter in den Figuren 6b, 6c und 7b dargestellt ist, stehen aus der dem Belagträger 2 zugewandten Belagträgerseite 35 des Trägerblechs 3 jeweilige die Öffnungen 32 des Trägerblechs 3 umrandende zylindrische Erhebungen 323 vor. Die hier als Kragen ausgebildeten Erhebungen 323 sind bevorzugt mit Spiel in den jeweiligen Öffnungen 22 des Belagträgers 2 aufgenommen, wie in Figur 6c zu erkennen ist. Entsprechend sind bei dieser Ausführungsvariante die Durchmesser der Öffnungen 22 des Belagträgers 2 größer als bei den Ausführungsvarianten für den Einsatz von Trägerblechen 3 ohne Erhebungen 323.

Denkbar ist prinzipiell auch, nur eine solche Erhebung 323 am Trägerblech 3 auszubilden, die eine der Öffnungen 32 des Trägerblechs 3 umrandet.

Die hier als Kragen ausgebildeten Erhebungen 323 dienen der Verdrehsicherung des Trägerblechs 3 am Belagträger,
In Bezug auf das aus dem Stand der Technik bekannte Trägerblech 103 gemäß Figur 3 mit nur einem Verdrehsicherungspin 136 und ein Zentralpin 133 bedeutet dies bzgl. der beispielhaft in den Fig. 6a, 6b, 7a und 7b gezeigten Ausführungsvariante eine Redundanz der Verdrehsicherung durch die mehreren, hier drei Erhebungen 323 mit entsprechend verbesserter Wirkung.

Darüber hinaus ermöglicht diese Bauform eine weitere Reduzierung der Dicke h₃ des Trägerblechs 3 und ebenso der Dicke h₂ des Belagträgers 2.

Eine Reduzierung auch der Dicke h₂ des Belagträgers 2 ist insbesondere dadurch ermöglicht, dass die in z-Richtung betrachtete Längserstreckung des der Verdrehsicherung dienenden Verdrehsicherungspins 136 des aus dem Stand der Technik bekannten Trägerblechs 130 gemäß Figur 3 und entsprechend die Dicke h₁₂₀ des Belagträgers 120 so bemessen sein muss, dass der Verdrehsicherungspin 136 auch in einer Schwenkstellung des Trägerblechs 130 noch in die dazu vorgesehene Öffnung 124 vorsteht.

Durch die in den Figuren 6b, 6c und 7b gezeigten mehreren, über den Belagträger 3 verteilten Erhebungen 323 ist gewährleistet, dass auch in einer Schwenkstellung bei in z-Richtung betrachet deutlich kleiner bemessenen Längserstreckungen der als Kragen ausgebildeten Erhebungen 323 stets mindestens eine der Erhebungen 323 in die Öffnung 32 des Belagträgers 3 vorsteht und damit verdrehsichernd wirkt.

Ein weiterer Vorteil der Anformung mehrerer solcher Erhebungen 323 liegt in einem reduzierten Verschleiß des Belagträgers 2 und des Trägerblechs 3, da zur Lagesicherung des Trägerblechs 3 am Belagträger 2 mehr (bei der in den Fig. 6a, 6b, 7a und 7b gezeigten Ausführungsvarianten drei) Kontaktflächen zur Verfügung stehen.

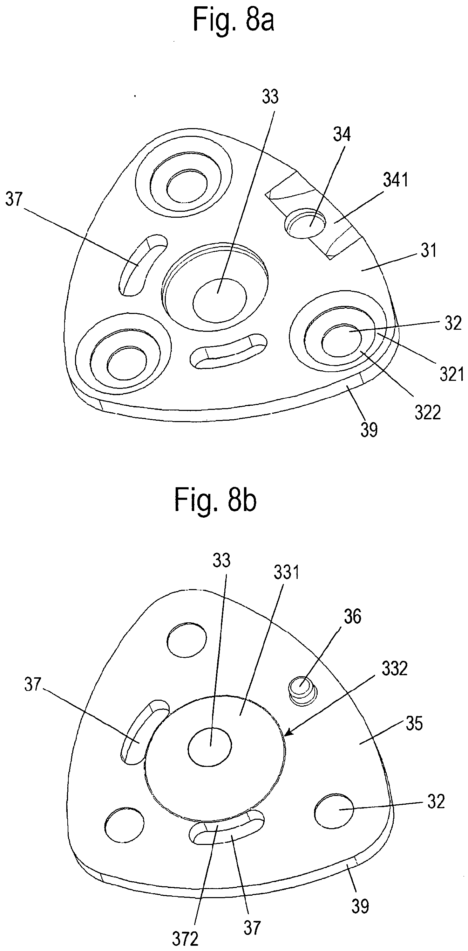

Bei der weiteren alternativen Ausführungsvariante gemäß **Figuren 8a und 8b** sind anstelle der die Dicke h₃ des Trägerblechs 3 lediglich verringernden Ausnehmungen 37, 38 als Durchgangsöffnung ausgebildete Ausnehmungen 37 eingebracht. Die Ausnehmungen 37 sind hier schlitzförmig ausgebildet.

Bevorzugt liegt ein der Erhebung 331 naher Innenrand 372 der Ausnehmung 37 unmittelbar an einem Außenrand 332 der Erhebung 331. Die Krümmung des Innenrandes 372 der Ausnehmung 37 folgt dabei dem Außenrand 332 der Erhebung 331.

Weiter ist bei dieser Ausführungsvariante analog zur in den Figuren 5a bis 5c gezeigten Ausführungsvariante auf der Reibelementseite 31 des Trägerblechs 3 ein Sackloch 34 eingeformt, das teilweise in einer Ausnehmung 341 eingebettet ist.

Auf der gegenüberliegenden Belagträgerseite 35 des Trägerblechs 3 steht auch hier ein Nocken 36 vor.

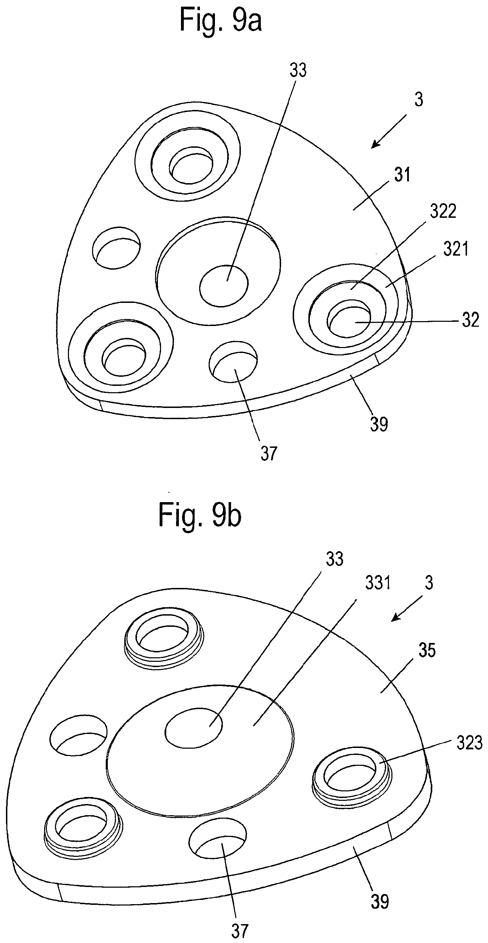

Bei der weiteren alternativen Ausführungsvariante, gezeigt in den **Figuren 9a und 9b****,** sind ebenfalls als Durchgangsöffnung ausgebildete Ausnehmungen 37 in das Trägerblech 3 eingebracht. Die Ausnehmungen 37 sind hier als kreisförmige Bohrungen ausgebildet.

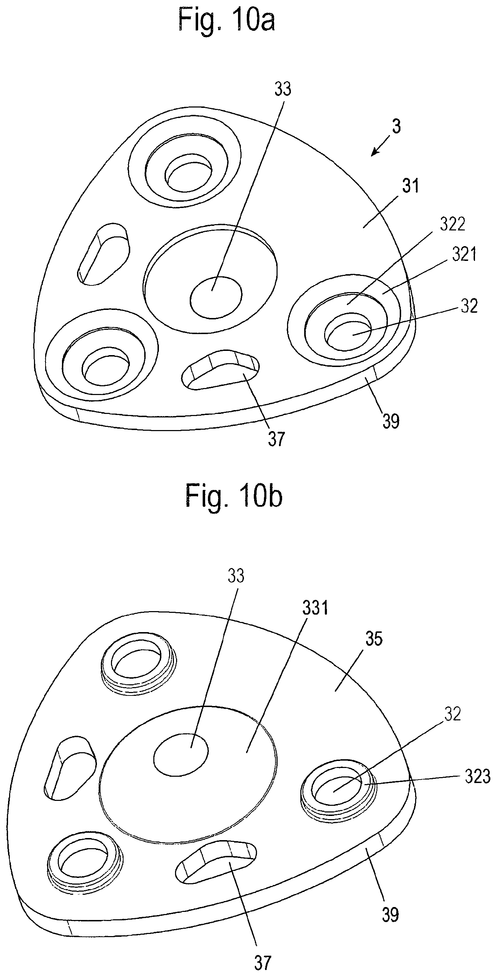

Denkbar sind auch andere Querschnittsgestaltungen solcher als Durchgangsöffnungen ausgebildeten Ausnehmungen 37, beispielsweise in einer dreiecksförmigen Gestaltung, wie es bei der Ausführungsvariante in den **Figuren 10a und 10b** gezeigt ist.

Bei beiden Ausführungsvarianten der Figuren 9a, 9b und 10a und 10b ist ähnlich der Ausgestaltung des Trägerblechs 3 in den Figuren 6a und 6b kein Nocken 36 vorgesehen.

Weiter ist bei diesem beiden Ausführungsvarianten analog zur in Figur 7a und 7b gezeigten Ausführungsvariante zylindrische Erhebungen 323 gezeigt, die die Öffnungen 32 des Trägerbleches 3 auf der Belagträgerseite 35 umrandend vorstehen.

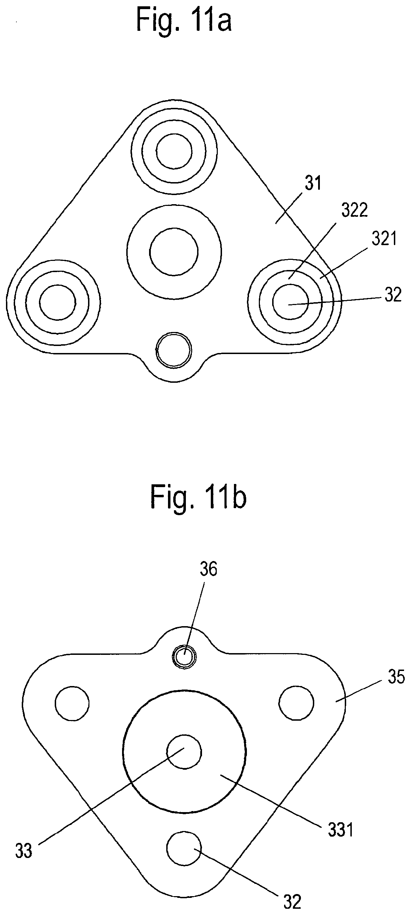

Bei der in den **Figuren 11a und 11b** gezeigten Ausführungsvariante ist als wesentlicher Unterschied die andere Gestaltung des Umfangrandes 39 zu nennen. So sind zwei der Seitenränder im Wesentlichen geradlinig gestaltet, während die dritte Seite des im Wesentlichen ebenfalls dreieckig ausgestalteten Trägerblechs 3 zentral mit einer Auswölbung ausgebildet ist, die den in Figur 11b gezeigten Nocken 36 teilweise umrahmt.

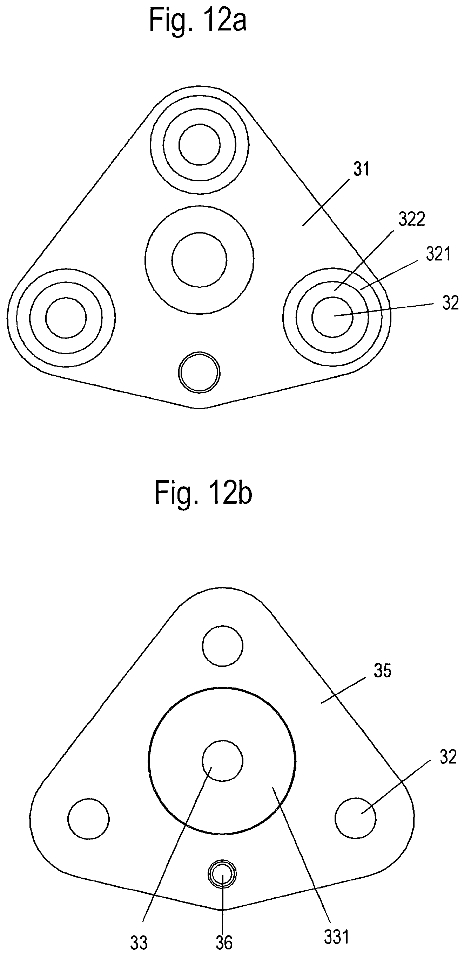

Bei der nochmals alternativen Ausgestaltung, gezeigt in den **Figuren 12a und 12b** ist anstelle der Auswölbung diese Seitenwand dachförmig nach außen vorstehend ausgebildet, mit zwei aufeinander zu laufenden geradlinigen Abschnitten, die sich im Bereich des Nockens 36 treffen und dort in einer Rundung ineinander übergehen.

Denkbar sind auch weitere Ausgestaltungen eines solchen Trägerblechs 3 mit weiteren Kombinationen der zuvor gezeigten Ausführungsvarianten, wobei die Ausnehmungen 37 auch Öffnungen mit quadratischem oder sonstigem polygonalem, sternförmigem, kreisabschnittsförmigem Querschnitt ausgebildet sein können.

Wichtig ist die Schaffung eines plattenförmigen Trägerbleches, bei dem die Kraftübertragung beim Andrücken der Reibelemente an einen Bremsbelag innerhalb der Plattenstruktur der Trägerbleche durch mehrachsige Spannungsverteilung übertragen werden.

### Bezugszeichenliste

- 1: Bremsbelag

- 2: Belagträger
- 21: Aussparung
- 22: Öffnung
- 23: Öffnung
- 24: Öffnung
- 25: Pfannenrand

- 3: Trägerblech
- 31: Reibelementseite
- 32: Öffnung
- 321: Pfannenrand
- 322: Stufe
- 323: Erhebung
- 33: Boden
- 331: Erhebung
- 332: Rand
- 34: Sackloch
- 35: Belagträgerseite
- 36: Nocken
- 37: Ausnehmung
- 371: Schlitz
- 372: Innenrand
- 38: Ausnehmung
- 39: Umfangsrand

- 4: Reibelement
- 41: Reibbelag
- 42: Reibelementplatte
- 43: Kugelkalotte
- 44: Reibfläche
- 5: Halteelement
- 51: Kugelkalotte
- 52: Halsteil
- 53: Kopfteil
- 54: Aufnahmenut

- 6: Federelement

- 100: Bremsbelag
- 120: Belagträger
- 121: Aussparung
- 122: Öffnung
- 123: Öffnung
- 124: Öffnung
- 125: Pfanne
- 130: Trägerblech
- 131: Erhebung
- 133: Boden
- 136: Nocken
- 140: Reibelement
- 141: Reibbelag
- 142: Reibelementplatte

- d₁: Abstand
- d₂: Abstand
- h₂: Dicke Belagträger
- h₁₂₀: Dicke Belagträger
- h₃: Dicke Trägerblech
- h₁₃₀: Dicke Trägerblech
- h₃₁: Bauhöhe Trägerblech
- h₄₁: Dicke Reibbelag
- h₁₄₁: Dicke Reibbelag
- x: Richtung
- y: Richtung
- z: Richtung

## Patentansprüche

1. Bremsbelag (1) für eine Teilbelag-Scheibenbremse eines Schienenfahrzeuges, aufweisend
- einen Belagträger (2),
- mehrere am Belagträger (2) sphärisch gelagerte, als Plattenelemente ausgebildete Trägerbleche (3),
- mehrere in Eckbereichen der Trägerbleche (3) an diesen sphärisch gelagerte Reibelemente (4),
- wobei jedes der Reibelemente (4) ein eine Öffnung (32) des Trägerbleches (3) und eine Öffnung (22) des Belagträgers (2) durchsetzendes Halteelement (5) aufweist, an dem ein Federelement (6) abgestützt ist,
- wobei jedes der Reibelemente (4) mittels des Federelements (6) gegenüber dem Belagträger (2) verspannt ist,
- wobei ein Umfangsrand (39) der Trägerbleche (3) so geformt ist, dass ein Abstand (d₁) des Umfangsrandes (39) senkrecht zu gedachten Verbindungslinien zwischen Mittelpunkten der Öffnungen (32) des Trägerbleches (3) zur Aufnahme der Halteelemente (5) mindestens das 0,6-fache eines minimalen Abstands (d₂) vom Mittelpunkt der Öffnungen (32) des Trägerbleches (3) zum Umfangsrand (39) der Trägerbleche (3) beträgt,
**dadurch gekennzeichnet, dass**
- die Trägerbleche (3) wenigstens eine Ausnehmung (37, 38) aufweisen, die separat zu den von einem jeweiligen Halteelement (5) durchsetzten Öffnungen (32) ausgebildet ist.

2. Bremsbelag nach Anspruch 1, **dadurch gekennzeichnet, dass** die Ausnehmung (37, 38) als die Dicke (h₃) des Trägerbleches (3) verringernde Vertiefung ausgebildet ist.

3. Bremsbelag nach Anspruch 2, **dadurch gekennzeichnet, dass** die Ausnehmung (37, 38) in einer dem Belagträger (2) zugewandten Seite (35) des Trägerbleches (3) ausgebildet ist.

4. Bremsbelag nach Anspruch 2 oder 3, **dadurch gekennzeichnet, dass** die Ausnehmung (37, 38) in einer den Reibelementen (4) zugewandten Seite (31) des Trägerbleches (3) ausgebildet ist.

5. Bremsbelag nach einem der Ansprüche 2 bis **4, dadurch gekennzeichnet, dass** in der Ausnehmung (37, 38) ein Schlitz (371) ausgebildet ist.

6. Bremsbelag nach einem der Ansprüche 2 bis 4, **dadurch gekennzeichnet, dass** die Ausnehmung (37, 38) als Durchgangsöffnung ausgebildet ist.

7. Bremsbelag nach Anspruch 6, **dadurch gekennzeichnet, dass** die als Durchgangsöffnung ausgebildete Ausnehmung (37, 38) als Nut, Bohrung oder Öffnung mit polygonalem Querschnitt ausgebildet ist.

8. Bremsbelag nach einem der Ansprüche 2 bis 5, **dadurch gekennzeichnet, dass** die Ausnehmung (37, 38) sich bis Umfangsrand (39) des Trägerbleches (3) erstreckt.

9. Bremsbelag nach einem der vorstehenden Ansprüche, **dadurch gekennzeichnet, dass** die Reibelemente (4) mittels einer Kugelkalotte (43) in jeweiligen kugelzonenförmigen Pfannenrändern (321) des jeweiligen Trägerblechs (3) schwenkbar aufgenommen sind.

10. Bremsbelag nach einem der vorstehenden Ansprüche, **dadurch gekennzeichnet, dass** aus einer dem Belagträger (2) zugewandten Seite (35) der Trägerbleche (3) jeweils eine zumindest abschnittsweise kalottenförmige Erhebung (331) in eine jeweilige zumindest abschnittsweise kalottenförmige Pfanne (25) des Belagträgers (2) vorsteht und in dieser schwenkbar aufgenommen ist.

11. Bremsbelag nach einem der vorstehenden Ansprüche, **dadurch gekennzeichnet, dass** aus einer dem Belagträger (2) zugewandten Seite (35) der Trägerbleche (3) eine die Öffnungen (32) des Trägerbleches (3) umrandende zylindrischer Erhebung (323) vorsteht, die in einer jeweiligen Ausnehmung des Belagträgers (2) mit Spiel aufgenommen ist.

12. Bremsbelag nach einem der vorstehenden Ansprüche, **dadurch gekennzeichnet, dass** an jedem der Trägerbleche (3) drei Reibelemente (4) angeordnet sind.

13. Bremsbelag nach einem der vorstehenden Ansprüche, **dadurch gekennzeichnet, dass** die Trägerbleche (3) in einer Ebene parallel zu einer Reibfläche (44) der Reibelemente (4) im Wesentlichen dreieckförmig, bevorzugt mit gerundeten Ecken, ausgebildet sind.

14. Bremsbelag nach einem der vorstehenden Ansprüche, **dadurch gekennzeichnet, dass** wenigstens ein durch ein Teilstück des Umfangsrandes (39) gebildeter Seitenrand der Trägerbleche (3) konvex geformt ist.

15. Bremsbelag nach einem der vorstehenden Ansprüche, **dadurch gekennzeichnet, dass** wenigstens ein durch ein Teilstück des Umfangsrandes (39) gebildeter Seitenrand der Trägerbleche (3) geradlinig geformt ist.

16. Bremsbelag nach einem der vorstehenden Ansprüche, **dadurch gekennzeichnet, dass** eine Aussparung (21) des Belagträgers (2) als Senkbohrung ausgebildet ist.

17. Anordnung eines Bremsbelags (1) einer Teilbelag-Scheibenbremse eines Schienenfahrzeuges an einem Belaghalter (2), **dadurch gekennzeichnet, dass** der Bremsbelag (1) gemäß einem der vorhergehenden Ansprüche ausgebildet ist.

## Claims

1. Brake lining (1) for a partially lined disk brake of a rail vehicle, having
- a lining carrier (2),
- multiple carrier metal sheets (3) mounted spherically on the lining carrier (2) and in the form of plate elements,
- multiple friction elements (4) mounted spherically on the carrier metal sheets (3) in the corner regions thereof,
- wherein each of the friction elements (4) has a retaining element (5) passing through an opening (32) of the carrier metal sheet (3) and an opening (22) of the lining carrier (2), on which retaining element a spring element (6) is supported,
- wherein each of the friction elements (4) is braced against the lining carrier (2) by means of the spring element (6),
- wherein a peripheral edge (39) of the carrier metal sheets (3) is shaped such that a distance (d₁) of the peripheral edge (39) perpendicular to the imaginary connecting lines between the center points of the openings (32) of the carrier metal sheet (3) for receiving the retaining elements (5) is at least 0.6 times a minimum distance (d₂) from the center point of the openings (32) of the carrier metal sheet (3) to the peripheral edge (39) of the carrier metal sheets (3),
**characterized in that**
- the carrier metal sheets (3) have at least one recess (37, 38), which is formed to be separate from the openings (32) through which a respective retaining element (5) passes.

2. Brake lining according to claim 1, **characterized in that** the recess (37, 38) is formed as a depression reducing the thickness (h₃) of the carrier metal sheet (3).

3. Brake lining according to claim 2, **characterized in that** the recess (37, 38) is formed in a side (35) of the carrier metal sheet (3) facing the lining carrier (2).

4. Brake lining according to claim 2 or 3, **characterized in that** the recess (37, 38) is formed in a side (31) of the carrier metal sheet (3) facing the friction elements (4).

5. Brake lining according to any one of claims 2 to 4, **characterized in that** a slot (371) is formed in the recess (37, 38).

6. Brake lining according to any one of claims 2 to 4, **characterized in that** the recess (37, 38) formed as a through opening.

7. Brake lining according to claim 6, **characterized in that** the recess (37, 38) formed as a through opening is formed as a groove, bore or opening with a polygonal cross-section.

8. Brake lining according to any one of claims 2 to 5, **characterized in that** the recess (37, 38) extends up to the peripheral edge (39) of the carrier metal sheet (3).

9. Brake lining according to any one of the preceding claims, **characterized in that** the friction elements (4) are received pivotably by means a spherical cap (43) in respective spherical zone-shaped pan edges (321) of the respective carrier metal sheet (3).

10. Brake lining according to any one of the preceding claims, **characterized in that** from a side (35) of the carrier metal sheets (3) facing the lining carrier (2) a respective at least partially dome-shaped elevation (331) projects into a respective at least partially dome-shaped pan (25) of the lining carrier (2) and is pivotably received therein.

11. Brake lining according to any one of the preceding claims, **characterized in that** a cylindrical elevation (323) protruding from a side (35) of the carrier metal sheets (3) facing the lining carrier (2) surrounds the openings (32) of the carrier plate (3) and is received with clearance in a respective recess of the lining carrier (2).

12. Brake lining according to any one of the preceding claims, **characterized in that** three friction elements (4) are arranged on each of the carrier metal sheets (3).

13. Brake lining according to any one of the preceding claims, **characterized in that** the carrier metal sheets (3) are formed in a plane parallel to a frictional surface (44) of the friction elements (4) and are essentially triangular in shape, preferably with rounded corners.

14. Brake lining according to any one of the preceding claims, **characterized in that** at least one side edge of the carrier metal sheets (3) formed by a partial section of the peripheral edge (39) is convex in shape.

15. Brake lining according to any one of the preceding claims, **characterized in that** at least one side edge of the carrier metal sheets (3) formed by a partial section of the peripheral edge (39) is straight.

16. Brake lining according to any one of the preceding claims, **characterized in that** a recess (21) of the lining carrier (2) is formed as a countersunk hole.

17. Assembly of a brake lining (1) of a partially lined disk brake of a rail vehicle on a lining holder (2), **characterized in that** the brake lining (1) is formed according to any one of the preceding claims.

## Revendications

1. Garniture de frein (1) pour un frein à disque à garniture partielle d'un véhicule ferroviaire, présentant
- un support de garniture (2),
- plusieurs tôles de support (3) montées de manière sphérique sur le support de garniture (2), formées en tant qu'éléments de plaque,
- plusieurs éléments de friction (4) montés de manière sphérique sur les tôles de support (3) dans des zones d'angle de celles-ci,
- dans laquelle chacun des éléments de friction (4) présente un élément de maintien (5) traversant une ouverture (32) de la tôle de support (3) et une ouverture (22) du support de garniture (2), élément de maintien sur lequel un élément à ressort (6) est supporté,
- dans laquelle chacun des éléments de friction (4) est tendu par rapport au support de garniture (2) au moyen de l'élément à ressort (6),
- dans laquelle un bord périphérique (39) des tôles de support (3) est formé de sorte qu'une distance (d₁) du bord périphérique (39) perpendiculaire aux lignes de liaison imaginaires entre des points centraux des ouvertures (32) de la tôle de support (3) pour recevoir les éléments de maintien (5) est d'au moins 0,6 fois une distance minimale (d₂) entre le point central des ouvertures (32) de la tôle de support (3) et le bord périphérique (39) des tôles de support (3),
**caractérisée en ce que**
- les tôles de support (3) présentent au moins un évidement (37, 38) qui est formé séparément des ouvertures (32) traversées par un élément de maintien (5) respectif.

2. Garniture de frein selon la revendication 1, **caractérisée en ce que** l'évidement (37, 38) est formé comme le renfoncement réduisant l'épaisseur (h₃) de la tôle de support (3).

3. Garniture de frein selon la revendication 2, **caractérisée en ce que** l'évidement (37, 38) est formé dans un côté (35) de la tôle de support (3) tourné vers le support de garniture (2).

4. Garniture de frein selon la revendication 2 ou 3, **caractérisée en ce que** l'évidement (37, 38) est formé dans un côté (31) de la tôle de support (3) tourné vers les éléments de friction (4).

5. Garniture de frein selon l'une quelconque des revendications 2 à 4, **caractérisée en ce qu'**une fente (371) est formée dans l'évidement (37, 38).

6. Garniture de frein selon l'une quelconque des revendications 2 à 4, **caractérisée en ce que** l'évidement (37, 38) est formé en tant qu'ouverture traversante.

7. Garniture de frein selon la revendication 6, **caractérisée en ce que** l'évidement (37, 38) formé en tant qu'ouverture traversante est formé en tant que rainure, alésage ou ouverture avec section transversale polygonale.

8. Garniture de frein selon l'une quelconque des revendications 2 à 5, **caractérisée en ce que** l'évidement (37, 38) s'étend jusqu'au bord périphérique (39) de la tôle de support (3).

9. Garniture de frein selon l'une quelconque des revendications précédentes, **caractérisée en ce que** les éléments de friction (4) sont logés de manière pivotante dans des bords d'auge (321) en forme de zone sphérique de la tôle de support (3) respective au moyen d'une calotte sphérique (43).

10. Garniture de frein selon l'une quelconque des revendications précédentes, **caractérisée en ce que** respectivement une saillie (331) au moins par sections en forme de calotte fait saillie dans une auge (25) au moins par sections en forme de calotte du support de garniture (2) à partir d'un côté (35) des tôles de support (3) tourné vers le support de garniture (2) et est logée dans celle-ci de manière pivotante.

11. Garniture de frein selon l'une quelconque des revendications précédentes, **caractérisée en ce qu'**une saillie cylindrique (323) entourant les ouvertures (32) de la tôle de support (3) fait saillie à partir d'un côté (35) des tôles de support (3) tourné vers le support de garniture (2) et est logée avec du jeu dans un évidement respectif du support de garniture (2).

12. Garniture de frein selon l'une quelconque des revendications précédentes, **caractérisée en ce que** trois éléments de friction (4) sont disposés sur chacune des tôles de support (3).

13. Garniture de frein selon l'une quelconque des revendications précédentes, **caractérisée en ce que** les tôles de support (3) sont formées dans un plan parallèle à une surface de friction (44) des éléments de friction (4) sensiblement de forme triangulaire, de préférence avec des coins arrondis.

14. Garniture de frein selon l'une quelconque des revendications précédentes, **caractérisée en ce qu'**au moins un bord latéral des tôles de support (3) formé par un tronçon du bord périphérique (39) est formé de manière convexe.

15. Garniture de frein selon l'une quelconque des revendications précédentes, **caractérisée en ce qu'**au moins un bord latéral des tôles de support (3) formé par un tronçon du bord périphérique (39) est formé de manière rectiligne.

16. Garniture de frein selon l'une quelconque des revendications précédentes, **caractérisée en ce qu'**un évidement (21) du support de garniture (2) est formé en tant que contre-alésage.

17. Agencement d'une garniture de frein (1) d'un frein à disque à garniture partielle d'un véhicule ferroviaire sur un support de garniture (2), **caractérisé en ce que** la garniture de frein (1) est formée selon l'une quelconque des revendications précédentes.
